Europäisches Patentamt

European Patent Office

Office européen des brevets

(19)

(11) Veröffentlichungsnummer: **0 016 921**
A1

# (12) EUROPÄISCHE PATENTANMELDUNG

(21) Anmeldenummer: 80100479.7

(22) Anmeldetag: 31.01.80

(51) Int. Cl.³: **B 66 F 3/28**, F 15 B 15/16

(30) Priorität: 05.02.79 CH 1131/79

(43) Veröffentlichungstag der Anmeldung: 15.10.80
Patentblatt 80/21

(84) Benannte Vertragsstaaten: **AT BE CH DE FR GB IT LU NL SE**

(71) Anmelder: **GEORG FISCHER AKTIENGESELLSCHAFT, Mühlentalstrasse 105, CH-8201 Schaffhausen (CH)**

(72) Erfinder: **Aberle, Beat, Bauhaldenstrasse 36, CH-5417 Untersiggenthal (CH)**

(54) **Teleskopbewegungselement.**

(57) Im Hohlraum (1) des Elementes (3) ist stets Druckluft vorhanden. Das freie Endglied (6) ist mit einem Seil (7) verbunden. Das Seil (7) wird von einer von einem Motor (5) getriebenen Trommel (8) auf- oder abgewickelt, wobei das Seil (7) immer straff bleibt. Dadurch ist ein genaues Anfahren von Zwischenpositionen möglich.

GEORG FISCHER AKTIENGESELLSCHAFT,    8201 Schaffhausen

BEAT ABERLE, Untersiggenthal

2098/FEW / 28.1.1980 / LH-bs /

Teleskopbewegungselement

Die Erfindung bezieht sich auf ein Teleskopbewegungselement,
insbesondere für industrielle Handhabungsgeräte gemäss dem
Oberbegriff des 1. Anspruches.

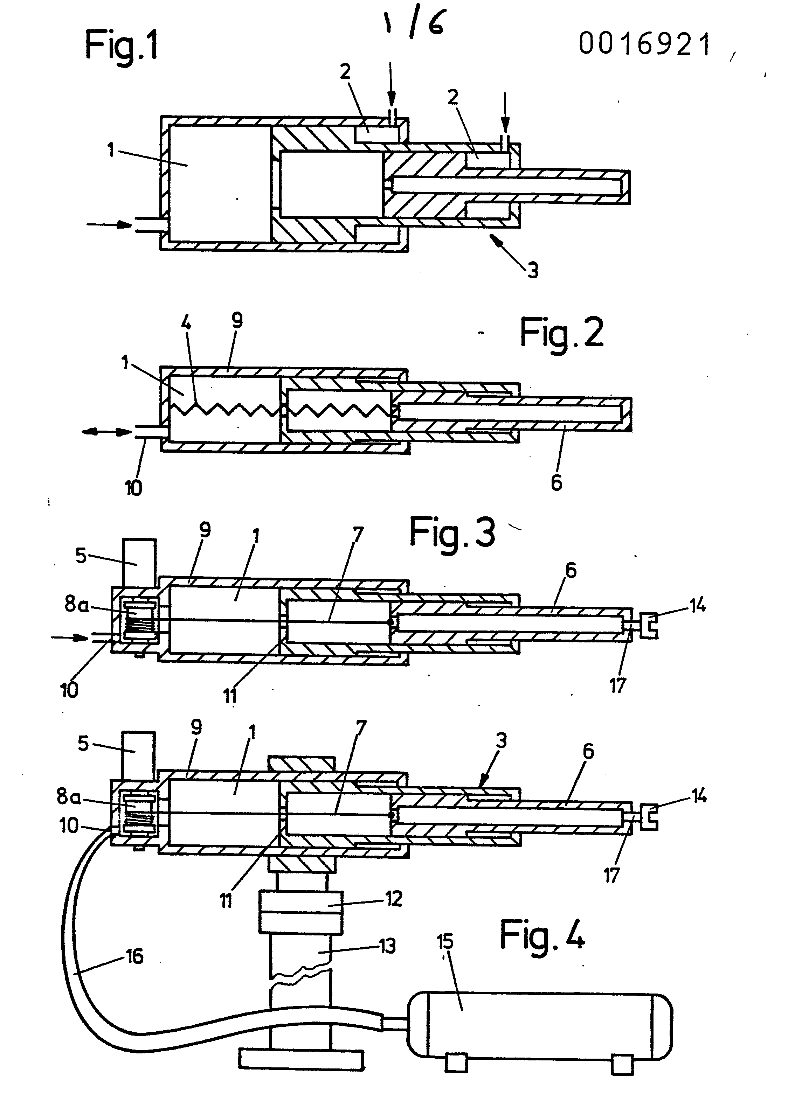

Ein bekanntes Teleskopbewegungselement wird durch Druck eines
Mediums ausgefahren und benützt auch zum Einfahren einen Ueberdruck. (Fig. 1)

Nachteile hierbei sind die Durchmesserzunahme pro Glied infolge
des Aussenkammervolumens, die zu einer raumaufwendigen und
schweren Konstruktion, einer geringeren Ausfahrgeschwindigkeit
und bei Pneumatikbetrieb zu einem vermehrten Luftverbrauch führt;
ausserdem besteht  die Notwendigkeit einer Verschlauchung zu
den Aussenkammern. Nachteilig ist ebenfalls das ungenaue Anfahren
von Zwischenpositionen. Das Konstanthalten der Ausfahr- und Einfahrgeschwindigkeit lässt sich nur mit entsprechend grossem
Steuerungsaufwand realisieren.

Weiter ist ein anderes teleskopförmiges Bewegungselement bekannt,
welches durch Druck eines Mediums ausgefahren und durch Unterdruck wieder eingefahren wird. Dadurch kann das Element kompakter und einfacher gestaltet werden. Ein solches Bewegungselement besitzt aber nur eine geringe Rückholkraft (Slip-Stick-
Effekt), da der Unterdruck maximal 1 bar beträgt und ist deshalb
nicht betriebsicher. Mehrere der obengenannten Nachteile bleiben
bestehen. Ausserdem besteht die Gefahr von Luftblasenbildung
im Oel bei Unterdruck.

Statt durch Unterdruck kann ein solches Element mittels einer
Feder eingefahren werden (Fig. 2). So ist aus der GB-PS 1 317 459
ein Teleskopelement zum seitlichen Heben von Fahrzeugen bekannt.
Beim Ausfahren wird ein flüssiges Druckmedium in den Innenraum
geleitet, wobei eine veränderliche Federkraft überwunden werden muss. Die Feder verbindet die beiden äussersten Endglieder
und fährt das Element bei Freigabe der Auslassöffnung der Druckflüssigkeit wieder ein. Auch dieses Element ist noch mit mehreren der obengenannten Nachteilen behaftet. Da bei Robotern oft
grosse Ausfahrwege und kleine Dimensionen verlangt werden, sind
Konstruktionen mit Federn auch aus diesem Grund als ungeeignet
zu betrachten.

Es ist Aufgabe der vorliegenden Erfindung die obengenannten
Nachteile zu vermeiden und, ausgehend vom Stand der Technik
ein betriebssicheres, einfaches und kompaktes Teleskopbewegungselement vorzuschlagen, bei dem insbesondere über die ganze
Reichweite des Elementes eine konstante Ausfahr- und Einfahrgeschwindigkeit und weiterhin ein genaues Anfahren von Zwischenpositionen, sowohl von der ausgefahrenen als auch von der eingefahrenen Position aus, möglich ist. Auch soll ein ruhiges Anfahren aller Positionen ermöglicht werden und das erfindungsgemässe Element soll auch für grosse Ausfahrwege geeignet sein.

Diese Aufgabe wird erfindungsgemäss gelöst durch die Lehre des
1. Anspruches. Vorteilhafte Weiterbildungen gehen aus den abhängigen Ansprüchen hervor.

Im folgenden wird die Erfindung anhand von dargestellten Ausführungsbeispielen in der Zeichnung näher erläutert, wobei auch die Vorteile ersichtlich werden.

Es zeigen:

Fig. 1    einen Längsschnitt durch ein bekanntes Teleskopbewegungselement,

Fig. 2    einen Längsschnitt durch ein anderes bekanntes Teleskopbewegungselement,

Fig. 3    einen Längsschnitt durch ein erfindungsgemässes Teleskopbewegungselement,

Fig. 4    einen Schnitt im Aufriss eines mit dem erfindungsgemässen Teleskopbewegungselement zusammengebauten Handhabungsgerätes,

Fig. 5a, b, c, d    eine vergleichende Darstellung bezüglich des Platzbedarfs zu drei bekannten Bewegungselementtypen,

Fig. 6    einen Längsschnitt eines Elements mit Gleitführung,

Fig. 7    einen Längsschnitt eines Elements mit Rollenführung,

Fig. 8    einen Querschnitt durch ein Teleskopbewegungselement,

Fig. 9 bis und mit 15    verschiedene Varianten von Rückholmechanismen,

Fig. 16 bis und mit 18    verschiedene Varianten für Kabel-Kettenzüge in einem erfindungsgemässen Teleskopbewegungselement, und

Fig. 19 bis und mit 22    verschiedene Varianten für den Zusammen-

0016921

bau von erfindungsgemässen Teleskopbewegungselementen.

Beim Ausfahren des Elements gemäss Fig. 1 wird die Innenkammer
bzw. der Hohlraum 1 mit einem Medium wie Luft oder Oel beaufschlagt. Das Einfahren des Teleskoparmes bzw. Teleskopbewegungselement 3 geschieht ebenfalls durch ein Druckmedium, das in
die verschiedenen Aussenkammern 2 geleitet wird.

Fig. 2 zeigt eine Ausführung, bei der das Ausfahren wie bei der
Ausführung nach Fig. 1 stattfindet, das Einfahren wird jedoch
durch eine Zugfeder 4 in der Innenkammer 1 bewerkstelligt. Das
eine Ende der Feder 4 ist am freien Endglied 6 und das andere
Ende an der Rückwand des grössten, stationären Endgliedes 9 befestigt.

Die erfindungsgemässe und bevorzugte Ausführung gemäss Fig. 3
weist drei axial gegeneinander verschiebbare Glieder auf. Es
können auch mehr sein. Vorteilhafterweise wird Luft als Medium
gewählt, da damit die Ausfahrzeiten und auch die Einfahr- bzw.
Rückholzeiten im Vergleich zu einer Flüssigkeit verkürzt werden
können und wobei die der Luft anhaftenden Nachteile, wie unten
aufgeführt, vermieden werden können. Im Hohlraum 1 erstreckt
sich ein von sich aus nachgiebiges und wenigstens in der Längsrichtung unelastisches Seil bzw. Kabel 7 (eine Kette ist ebenfalls ohne weiteres möglich), dessen eine Ende mit dem freien
Endglied 6 verbunden ist. Das andere Ende des Seils 7 ist auf
eine Einzieh- und Freigabevorrichtung in Form einer Auf- und
Abwickeltrommel 8a gewickelt, die im Hohlraum 1 nahe der Rückwand des grössten, in einer Einspanneinrichtung 12 einzuspannenden Endgliedes 9 angeordnet ist. Die Trommel 8 wird von einem
ausserhalb des Hohlraums 1 befindlichen Drehantrieb, hier
einem Schrittmotor 5, angetrieben. Der Hohlraum 1 steht immer
unter Druck, obwohl der Druck veränderbar sein kann. Druckluft
aus einer externen Quelle steht über eine Durchtrittsöffnung
10 mit dem Hohlraum 1 in Verbindung. Anstelle eines Schrittmotors können ebensogut andere schnell stoppende Antriebe treten, z.B. ein Stoppmotor oder ein Hydromotor.

Die Wirkungsweise des erfindungsgemässen Teleskopbewegungselements beruht auf den sich entgegengerichteten Kräften des immer straff stehenden Seiles 7 und der Luft. Beim Einfahren des Teleskoparmes 3 zieht das Seil 7 zuerst nur das Endglied 6 zurück, bis das Endglied 6 gegen einen Anschlag 11 des folgenden Gliedes stösst. So werden die Glieder der Reihe nach eingezogen. Mittels des Schrittmotors 5 können genaue Zwischenpositionen angefahren werden, was im allgemeinen mit Luft als Fluidum in bekannten Elementen nicht ohne weiteres möglich ist. Die Motordrehzahl und somit die Einfahrgeschwindigkeit sind konstant.

Das Ausfahren geschieht durch Druckluft, wobei das Seil 7 wiederum unter Zug steht und die genaue Position bestimmt. Es ist auch jetzt eine Schrittsteuerung bzw. eine Feinverstellung möglich, da der Schrittmotor 5 allmählich nur eine bestimmte Seillänge freigibt bzw. nachlässt; dadurch ist auch von der eingefahrenen Position aus ein genaues und ruhiges Anfahren (ohne Stösse) von Zwischenpositionen gewährleistet. Bei gleicher Drehzahl des Antriebes ist die Ausfahr- und Einfahrgeschwindigkeit gleich.

Vorteilhafterweise kann Druckluft oder Druckoel für die Betätigung des Greifers 14 durch einen internen Kanal 17 direkt aus dem Hohlraum 1 zugeführt werden. Anstelle des Greifers kann ein anderes Arbeitsgerät treten.

Fig. 4 zeigt das Teleskopbewegungselement, das als Baukastenelement in einemn drehbaren Kopf 12 eines Ständers 13 eingespannt ist. Das Endglied 6 kann somit jede beliebige Raumposition genauestens anfahren. Ein stationärer Druckspeicher 15 ist über einen Schlauch 16 mit der Innenkammer 1 verbunden.

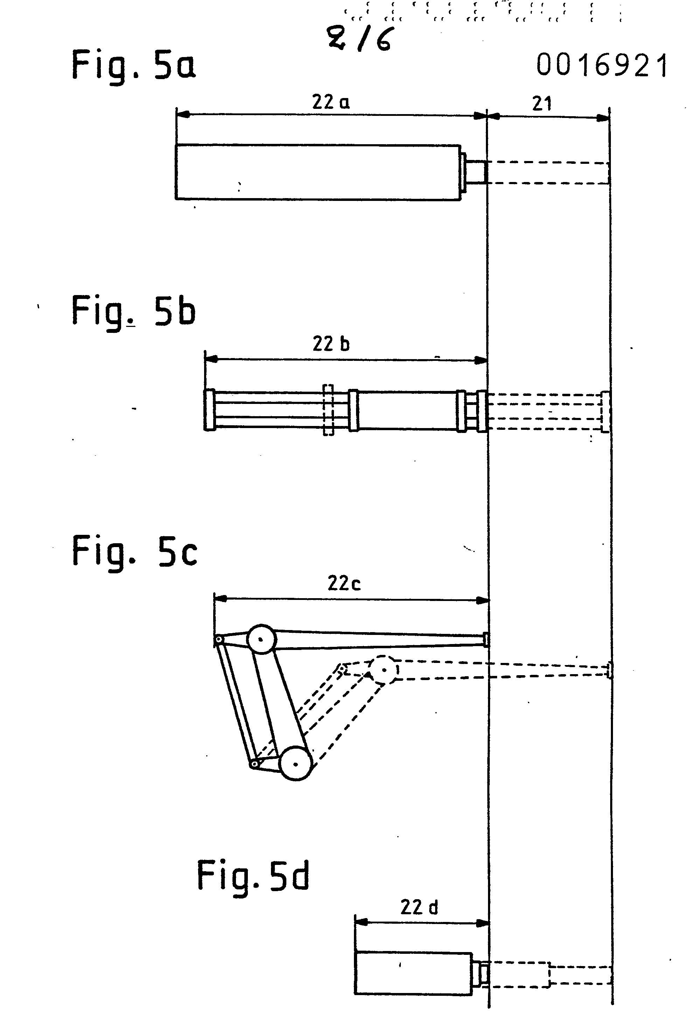

Fig. 5a, 5b und 5c stellen bekannte Robotersysteme dar und Fig. 5d ist das erfindungsgemässe Teleskopbewegungselement. Der Ausfahrweg 21 ist konstant gezeichnet, während die Eigenlängen 22a, 22b, 22c bzw. 22d jeweils graphisch miteinander verglichen werden.

Fig. 5a kann als Typ eines Stangenroboters bezeichnet werden, während Fig. 5b als Typ eines Baukastenelementes gilt. Fig. 5c ist ein Knickarm-Roboter. Das durchschnittliche Verhältnis Ausfahrweg 21 / Eigenlänge 22a bzw. 22b, 22c, 22d ist 1:2,5 bzw. 1:2,3 und 1:2,2 und beim erfinderischen Element 1:1, das deshalb am raumsparendstens ist.

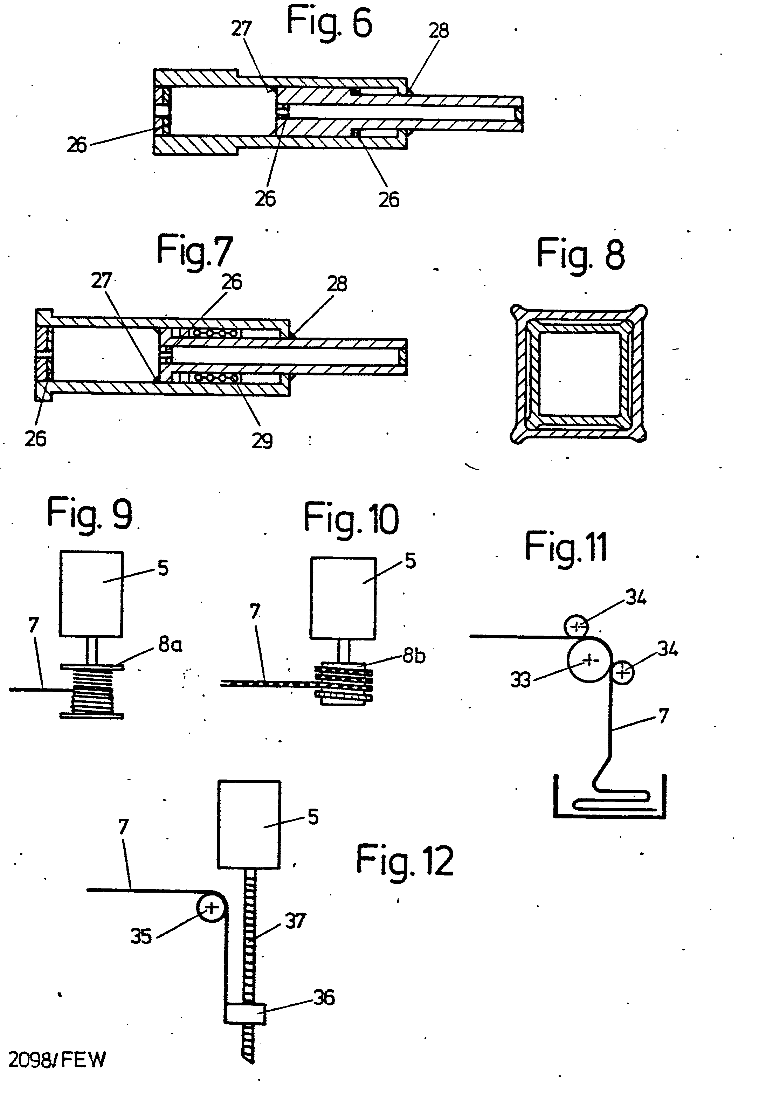

Die Fig. 6 und 7 zeigen Kunstruktionsformen des Teleskopbewegungselementes.

Die Gleit-Ausführung gemäss Fig. 6 hat an verschiedenen Stellen Dämpfungen 26. Weiter sind Dichtungen 27 und Abstreifer 28 vorgesehen.

Die Ausführung nach Fig. 7 hat eine Kugelrollenbüchse 29, so dass die Reibung zwischen zwei Gliedern herabgesetzt werden kann. Das ist besonders wichtig bei schwereren Lasten im Greifer 14.

Die Querschnittformen der Teleskopelemente können rohrförmig, quadratisch, rechteckig (liegend oder stehend), dreieckig (die Spitze nach oben oder nach unten) sein, oder beispielsweise eine in Fig. 8 gezeichnete Form aufweisen.

Die Fig. 9 bis und mit 15 zeigen verschiedene Zugorgane.

Fig. 9 zeigt eine Auf- und Abwickeltrommel 8a mit einem Kabel 7.

Fig. 10 zeigt einen Zahnwickler 8b mit einer Gelenk-Kette 7 als Zugorgan.

Fig. 11 zeigt eine Ausführung mit einer Kette oder einem Seil 7, die bzw. das zwischen einem Treibrad 33 und zwei Führungsrädern läuft.

Fig. 12 zeigt eine Ausführung mit einer Kette oder einem Seil 7, die bzw. das über eine Umlenkrolle 35 mit einem Gewindeblock 36 verbunden ist. Der Block 36 wird durch eine angetriebene Spindel 37 linear bewegt. Auch ist die Anwendung des Flaschenzug-Prinzips möglich.

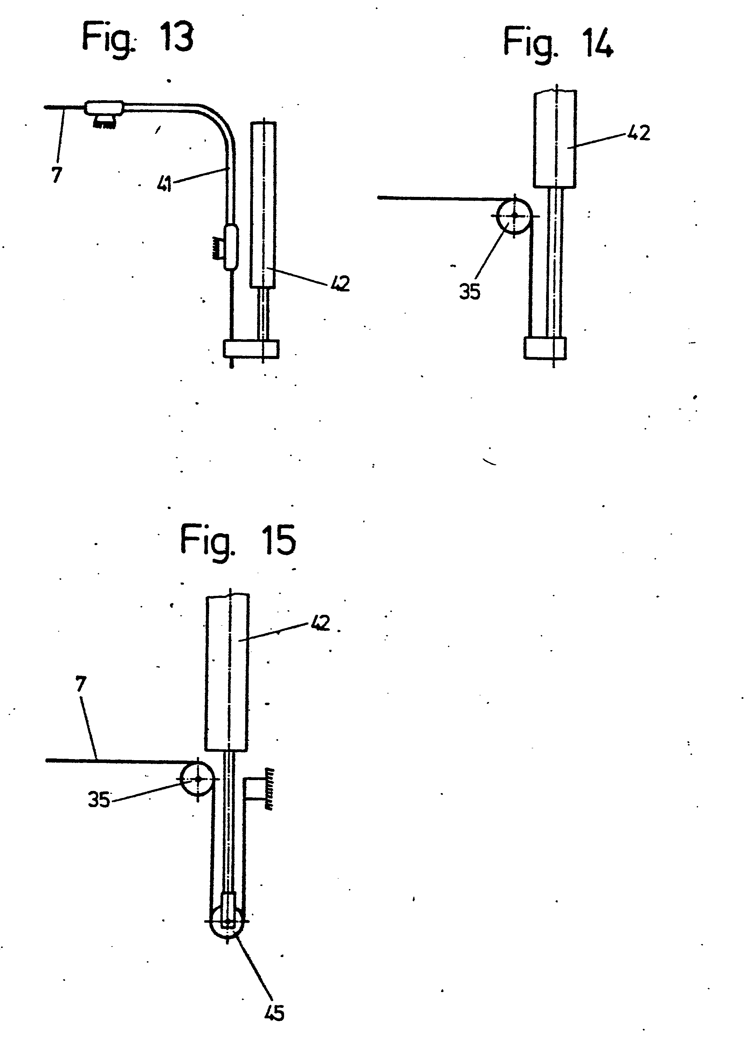

Fig. 13 zeigt eine Ausführung mit einer Schlauchführung 41, durch die das Seil 7 geführt wird. Das Seil 7 ist mit einem Linearantrieb 42 verbunden.

Fig. 14 zeigt eine ähnliche Ausführung wie Fig. 13, wobei lediglich eine Umlenkrolle 35 statt der Schlauchführung angewendet worden ist.

Fig. 15 zeigt eine Ausführung mit Uebersetzung des Linearantriebes 42, wobei eine weitere linear bewegbare Umlenkrolle 45 zur Anwendung kommt.

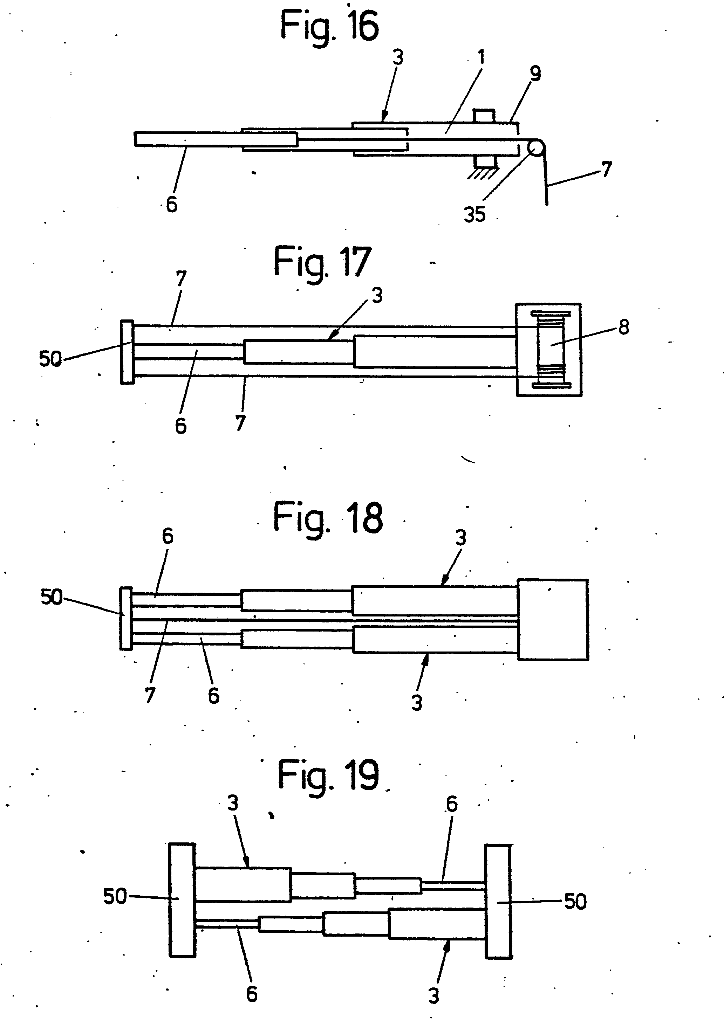

Die Fig. 16 bis 18 zeigen verschiedene Anordnungen für die Zugorgane.

Fig. 16 zeigt eine Ausführung für Kabel-Kettenzüge, wobei das Kabel bzw. die Kette 7 durch die Rückwand des grössten, eingespannten Endgliedes 9 hindurch verläuft.

Fig. 17 zeigt eine Ausführung, wobei das Zugorgan aus zwei getrennten Strängen besteht. Die Seile 7 verlaufen ausserhalb und beidseits der Glieder und parallel dazu. Sie werden gleichzeitig durch den gleichen Wickler 8 aufgewickelt.

Fig. 18 zeigt eine schwerere Ausführung für grössere Lasten, bei der das Kabel bzw. die Kette 7 zwischen zwei Teleskoparmen 3 verläuft. Dabei sind die Endglieder 6 und das Kabel 7 an einem gemeinsamen Block 50 befestigt.

Eine Absicherung gegen Verdrehung bei Rundprofilen für Teleskopbewegungselemente kann durch Keilnuten (positive oder negative) und durch das Anbringen von einer oder mehreren Führungsflächen erreicht werden. Auch eine zwei-armige Ausführung, wie Fig. 18 zeigt, kann dazu dienen.

Beispiele für einen Zusammenbau der Elemente:

a) eine ein-armige Ausführung wie in Fig. 4 gezeigt ist,

b) eine stabilere zwei-armige Ausführung wie die Fig. 18 zeigt,

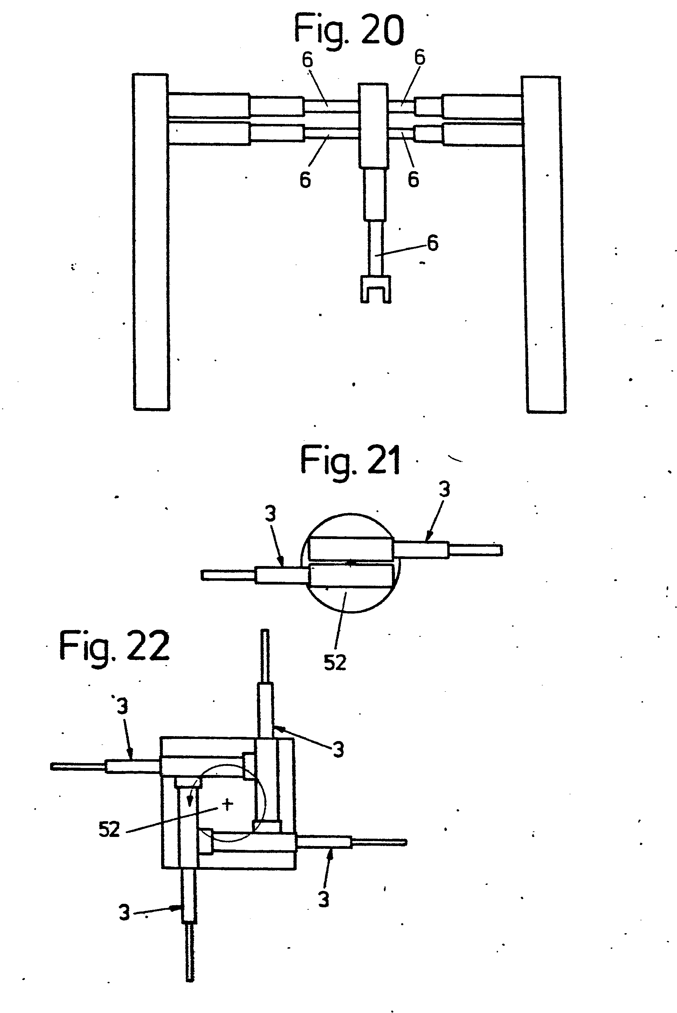

c) eine drei-armige Ausführung nach dem Prinzip der Fig. 18, mit einem zusätzlichen Arm 3 wobei alle Arme 3 parallel verlaufen,

d) eine Abwandlung der Ausführung nach Fig. 18, wobei das grösste Endglied 9 des zusätzlichen Armes 3 am Block 50 befestigt ist und wobei der zusätzliche Arm nicht parallel zu den anderen zwei verläuft,

e) eine Ausführung nach Fig. 19, bei der zwei Arme 3 gegeneinander plaziert sind,

f) eine "Portal"- Ausführung nach Fig. 20,

g) eine Ausführung nach Fig. 21, wobei zwei Arme 3 auf einer Rundtaktstation 52 positioniert sind, und

h) eine Ausführung nach g), wobei vier Arme 3 auf einer Rundtaktstation 52 positioniert sind. (Fig. 22)

Die Vorteile, die sich aus der vorliegenden Erfindung ergeben sind:

- das Teleskopbewegungselement ist einfach und kompakt und kann Teil eines Baukastensystems sein,

0016921

- das Verhältnis Platzbedarf/Ausfahrweg ist sehr günstig,

- die Durchmesserzunahme pro Glied ist relativ klein,

- es besteht kein Verschlauchungsproblem zu den Aussenkammern 2,

- die Aussenflächen der Glieder sind nicht beschädigungsempfindlich (Korrosion, Zerkratzen), weil die Dichtungsflächen immer abgedeckt sind. Deshalb auch keine Leckage. Der Rückholmechanismus verhindert Stick-Slip-Effekte,

- die Ausfahr- und Einfahrreihenfolge der Glieder ist bestimmt,

- die Ausfahr- und Einfahrgeschwindigkeit ist auf einfache Weise (Motordrehzahl) genau steuerbar,

- mit einem Druckspeicher praktisch kein Luftverbrauch,

- eine Streckensteuerung ist z.B. mit Schrittmotoren realisierbar,

- das Teleskopbewegungselement kann aus Leichtmetall oder aus Kunststoff hergestellt werden, und

- ein genaues und mit Luft als Medium auch ein rasches Anfahren von Zwischenpositionen ist möglich,

- Druckluft zum Greifer, der am freien Endglied 6 befestigt ist, kann direkt durch eine interne Durchtrittsöffnung aus dem Hohlraum 1 zugeführt werden, so dass dementsprechende Zufuhrschläuche entfallen,

- ein stossfreies Anhalten in allen Positionen.

0016921

## Patentansprüche

1. Teleskopbewegungselement, insbesondere für Handhabungsgeräte, mit mindestens zwei axial gegeneinander verschiebbaren Teleskopgliedern, mit einem Zugorgan (7), das am
freien Endglied (6) befestigt ist und sich in Richtung
zum eingespannten Endglied (9) erstreckt, und mit einer
Medium-Durchtrittsöffnung (10) in der Wand des eingespannten Endgliedes, wobei der Hohlraum (1) der Glieder ständig
mit dem Medium gefüllt ist, dadurch gekennzeichnet, dass
das Zugorgan (7) nachgiebig und unelastisch, z.B. ein Seil
ist, und dass eine Einzieh- und Freigabevorrichtung (8)
für das Zugorgan (7) vorgesehen ist.

2. Element nach Anspruch 1, dadurch gekennzeichnet, dass die
Einzieh- und Freigabevorrichtung ein Wickler (8a, 8b)
ist.

3. Element nach Anspruch 1, dadurch gekennzeichnet, dass die
Einzieh- und Freigabevorrichtung ein Treibrad (33) ist,
das mit mindestens einem Führungsrad (34) zusammenwirkt.

4. Element nach Anspruch 1, dadurch gekennzeichnet, dass die
Einzieh- und Freigabevorrichtung ein Gewindeblock (36)
ist, der mit einer drehbaren Spindel (37) zusammenwirkt.

5. Element nach einem der Ansprüche 1 bis 4, dadurch gekennzeichnet, dass die Einzieh- und Freigabevorrichtung (8a, 8b)
von einem schnell stoppbaren Motor (5) angetrieben ist.

6. Element nach Anspruch 1, dadurch gekennzeichnet, dass die
Einzieh- und Freigabevorrichtung ein Linearantrieb
(42) ist (Fig. 13, 14, 15).

7. Element nach einem der Ansprüche 1 bis 6, dadurch gekennzeichnet, dass das Zugorgan (7) sich im Hohlraum (1) erstreckt.

8. Element nach einem der Ansprüche 1 bis 6, dadurch gekennzeichnet, dass das Zugorgan (7) aus zwei getrennten Strängen bestehen, die ausserhalb der Glieder und parallel dazu verlaufen (Fig. 17).

9. Element nach einem der Ansprüche 1 bis 5 und 7, dadurch gekennzeichnet, dass die Einzieh- und Freigabevorrichtung (8a, 8b) im Hohlraum (1) und deren Antrieb (5) ausserhalb des Hohlraumes angeordnet ist.

10. Element nach einem der Ansprüche 1 bis 9, dadurch gekennzeichnet, dass das Medium Luft ist.

11. Element nach einem der Ansprüche 1 bis 10, dadurch gekennzeichnet, dass ein Kanal (17) im freien Endglied (6) vorhanden ist, der Medium aus dem Hohlraum (1) als Steuermedium zu einem am freien Endglied (6) befestigten Arbeitsgerät (14) leitet.

Fig.1

0016921

Fig.2

Fig.3

Fig.4

2098/FEW

Fig. 5a

22 a | 21

Fig. 5b

22 b

Fig. 5c

22c

Fig. 5d

22 d

0016921

2/6

2098/FEW

3/6

0016921

Fig. 6

27    28

26

26    26

Fig.7

27  26    28

26    29

Fig. 8

Fig. 9    Fig.10    Fig.11

5    5    34

7    7    34

8a    8b    33

7

5

7    Fig.12

35    37

36

2098/FEW

0016921

Fig. 13

Fig. 14

Fig. 15

2098/FEW

## Fig. 16

## Fig. 17

## Fig. 18

## Fig. 19

## Fig. 20

## Fig. 21

## Fig. 22

2098/FEW

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 628 029 (L. PIETZSCH) <br> * Ansprüche 3, 4, 11; Fig. 1 * <br> -- | 1,2, <br> 7-9 |
| X | FR - A - 2 192 059 (R. SIMONNOT) <br> * Ansprüche 1, 4; Fig. 1-3 * <br> -- | 1,2, <br> 10 |
| X | FR - A - 1 531 449 (ETAT FRANCAIS) <br> * Fig. 1, 2 * <br> -- | 1,6, <br> 7 |
| X | FR - E - 93 076 (ETAT FRANCAIS) <br> * Fig. 1, 2 * <br> -- | 1,6, <br> 7 |
| X | Patents Abstracts of Japan <br> Band 2, Nr. 123, 14. Oktober 1978, <br> Seite 4004 M 78 <br> & JP - A - 53 - 93263 <br> -- | 1,5,7, <br> 9,10 |
| A | US - A - 1 928 533 (M.T. GOSS) <br> * Fig. 1 bis 3 * <br> -- | 1,2, <br> 8 |
| D | GB - A - 1 317 459 (M.J. CHAVARRIA) <br> * Fig. 1 * <br> ---- | 1 |

**KLASSIFIKATION DER ANMELDUNG (Int.Cl.3)**

B 66 F 3/28
F 15 B 15/16

**RECHERCHIERTE SACHGEBIETE (Int. Cl.3)**

B 66 F 3/00
F 15 B 15/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | | | |
|---|---|---|---|
| X | Der vorliegende Recherchenbericht wurde für alle Patentansprüche erstellt. | | |
| Recherchenort <br> Berlin | Abschlußdatum der Recherche <br> 22-05-1980 | Prüfer <br> KANAL | |

EPA form 1503.1 06.78